Europäisches Patentamt

European Patent Office

Office européen des brevets

(19)

(11) Numéro de publication : **0 368 691 B1**

(12)

# FASCICULE DE BREVET EUROPEEN

(45) Date de publication du fascicule du brevet :
**02.01.92 Bulletin 92/01**

(51) Int. Cl.⁵ : **B60T 13/24,** B60T 13/52

(21) Numéro de dépôt : **89402719.2**

(22) Date de dépôt : **03.10.89**

(54) **Dispositif de commande d'un servomoteur d'assistance, notamment pour système de freinage de véhicule automobile.**

(30) Priorité : **10.11.88 FR 8814729**
**31.05.89 FR 8907146**

(43) Date de publication de la demande :
**16.05.90 Bulletin 90/20**

(45) Mention de la délivrance du brevet :
**02.01.92 Bulletin 92/01**

(84) Etats contractants désignés :
**DE ES FR GB IT**

(56) Documents cités :
**EP-A- 0 260 046**
**DE-A- 3 517 850**
**FR-A- 2 334 862**

(73) Titulaire : **BENDIX EUROPE Services Techniques S.A.**
**126 rue de Stalingrad**
**F-93700 Drancy (FR)**

(72) Inventeur : **Levrai, Roland Bendix France**
**126 Rue de Stalingrad**
**F-93700 Drancy (FR)**

(74) Mandataire : **Lejet, Christian**
**Bendix Europe Service Techniques Service Brevets 126 rue de Stalingrad**
**F-93700 Drancy (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne un dispositif de commande prévu pour être associé à un servomoteur d'assistance, et notamment à un servomoteur équipant le système de freinage d'un véhicule automobile.

De façon plus précise, l'invention concerne un dispositif de commande prévu pour être utilisé sur un servomoteur d'assistance tel que celui qui est décrit dans le document FR-A-2334862 (US-A-4117769). Dans ce document, il est décrit un servomoteur comportant de façon habituelle un boîtier dans lequel est logé un piston moteur formant à l'intérieur du boîtier une chambre avant et une chambre arrière. L'actionnement de la pédale de frein déplace un organe de commande d'entrée du servomoteur, qui agit sur une valve de commande ayant pour effet de créer une différence de pression entre la chambre arrière et la chambre avant. Cette différence de pression se traduit par l'application d'une force d'assistance qui vient s'ajouter à la force mécanique exercée sur l'organe de commande d'entrée.

Dans ce document, le servomoteur comprend de plus, à l'intérieur de la chambre arrière, un organe moteur auxiliaire comportant une chambre de pression apte à être reliée à une source de pression extérieure par l'intermédiaire d'un dispositif de commande. Lorsque le dispositif de commande est actionné, l'organe moteur auxiliaire exerce ainsi sur le piston moteur du servomoteur une force d'assistance induite par l'actionnement de la pédale de frein. Dans le document FR-A-2 334 862, cette force d'assistance auxiliaire est utilisée totalement indépendamment du système de freinage normal du véhicule, pour permettre l'adjonction sur ce dernier d'un système de freinage automatique assisté, sans qu'il soit nécessaire d'avoir recours à un servomoteur supplémentaire.

La présente invention a pour objet une application totalement différente du servomoteur équipé d'un organe moteur auxiliaire tel que décrit dans le document FR-A-2334862, l'organe moteur auxiliaire n'étant plus utilisé pour permettre l'actionnement des freins du véhicule par un système automatique indépendant du système de freinage du véhicule, mais au contraire pour améliorer l'efficacité de ce dernier système dans certains conditions de freinage.

De façon plus précise, l'invention a pour objet un dispositif de commande d'un servomoteur d'assistance du type précité, conçu pour exercer automatiquement une force d'assistance supplémentaire sur le piston moteur du servomoteur, lors d'un actionnement fort et prolongé de la pédale de frein, ce qui permet de réduire l'encombrement diamétral du servomoteur pour une force d'assistance donnée ou, au contraire, d'accroître la force d'assistance pour un encombrement inchangé.

Selon l'invention, ce résultat est obtenu au moyen d'un dispositif de commande d'un servomoteur d'assistance comportant un boîtier, dans lequel un piston moteur séparant une chambre avant d'une chambre arrière peut se déplacer lors d'un actionnement d'un organe de commande d'entrée établissant une différence de pression entre la chambre arrière et la chambre avant, un organe moteur auxiliaire comportant une chambre de pression étant placé dans la chambre arrière du servomoteur, le dispositif de commande étant placé entre la chambre de pression du servomoteur et une source de pression, et étant caractérisé par le fait qu'il comprend une valve normalement fermée, au travers de laquelle la chambre de pression communique avec la source de pression, et des moyens d'actionnement de ladite valve, sensibles à la différence de pression entre la chambre arrière et la chambre avant pour ouvrir automatiquement la valve lorsque cette différence dépasse un seuil prédéterminé.

Avantageusement, le dispositif de commande selon l'invention comprend un corps dans lequel sont formés une chambre d'entrée de fluide sous pression communiquant avec la source de pression, une chambre de sortie de fluide sous pression, communiquant avec la chambre de pression, une première chambre de commande communiquant avec la chambre avant et une deuxième chambre de commande communiquant avec la chambre arrière, lesdites chambres d'entrée et de sortie formant entre elles un premier siège de valve contre lequel un clapet est normalement maintenu en appui étanche par un premier moyen élastique, les première et deuxième chambres de commande étant séparées de façon étanche par un moyen formant piston axialement aligné avec le siège de valve et dont un prolongement porte un deuxième siège de valve apte à venir en appui étanche sur le clapet et à déplacer ce dernier en éloignement du premier siège, un deuxième moyen élastique maintenant normalement le deuxième siège de valve éloigné du clapet.

Selon un autre mode de réalisation, le dispositif de commande comprend un corps creux dans lequel sont formées une chambre d'entrée de fluide sous pression communiquant avec la source de pression, une chambre de sortie de fluide sous pression, communiquant avec la chambre de pression, une première chambre de commande communiquant avec la chambre avant et une deuxième chambre de commande communiquant avec la chambre arrière, les chambres d'entrée et de sortie formant entre elles un premier siège de valve contre lequel un premier clapet est normalement maintenu en appui étanche par un premier moyen élastique, les première et deuxième chambres de commande étant séparées de façon étanche par un moyen formant piston axialement aligné avec le premier siège de valve et dont un prolongement forme un second clapet apte à venir en appui étanche sur un second siège de valve solidaire du premier clapet, de manière à fermer dans un premier temps une communication entre la chambre de sortie de fluide sous pression et la chambre avant lorsqu'une différence de pression s'établit entre les chambres de commande, et, dans un deuxième temps, à déplacer le premier clapet en éloignement du premier siège, un deuxième moyen élastique maintenant normalement le second clapet éloigné du second siège.

Deux modes de réalisation préférés de l'invention vont à présent être décrits, à titre d'exemples non limitatifs, en se référant aux dessins annexés sur lesquels :

— la Figure 1 représente de façon schématique une partie d'un système de freinage comportant un servomoteur auquel est associé un dispositif de commande conforme à l'invention, ce dispositif ainsi que le servomoteur étant représentés en coupe longitudinale, et

— la Figure 2 représente schématiquement un autre mode de réalisation du dispositif de commande selon l'invention.

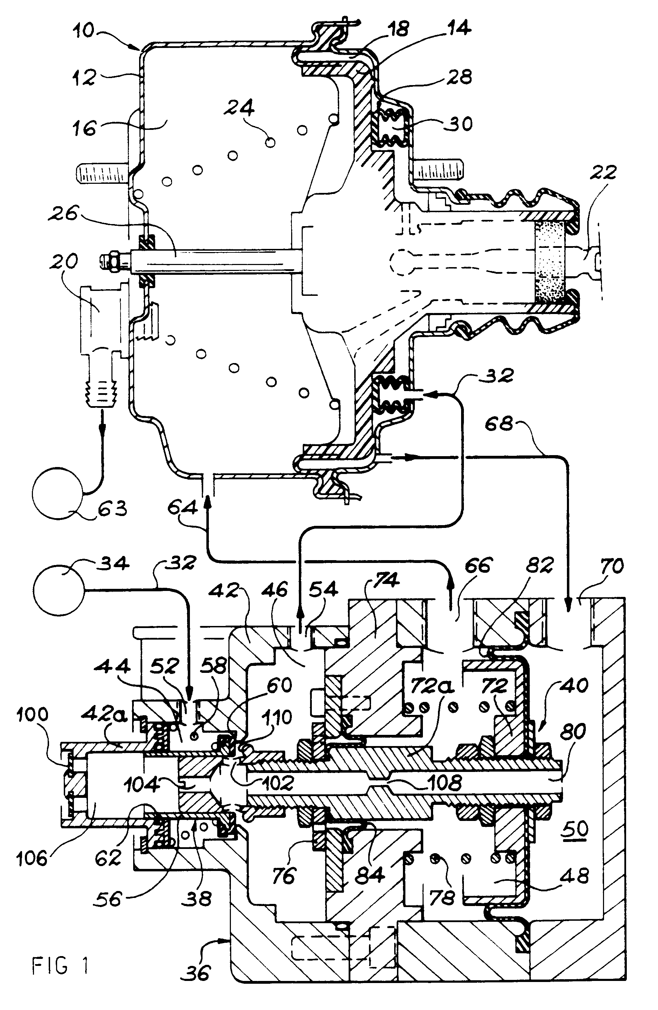

Sur la Figure 1, la référence 10 désigne de façon générale un servomoteur d'assistance au freinage du type pneumatique à dépression. Ce servomoteur est semblable à celui qui est décrit dans le document FR-A-2334862. Pour une description détaillée on se reportera donc à ce document.

Pour la bonne compréhension de l'invention, on rappellera ici que le servomoteur 10 comprend un boîtier 12 dont le volume intérieur est divisé en deux parties par un piston moteur 14. Compte tenu de l'implantation du servomoteur sur le véhicule, ces deux parties du volume intérieur du boîtier 12 constituent une chambre avant 16 et une chambre arrière 18. Un embout 20 monté sur le boîtier 12 permet de faire communiquer par un circuit approprié la chambre avant 16 avec une source de vide 63 installée sur le véhicule.

Le servomoteur 10 comprend de plus un organe de commande d'entrée constitué par une tige de poussée 22 dont le déplacement est commandé par l'actionnement de la pédale de frein (non représentée) du véhicule. L'extrémité de la tige de poussée 22 placée dans le piston moteur 14 actionne une valve trois voies (non représentée), permettant de faire communiquer la chambre arrière 18 soit avec la chambre avant 16, soit avec l'atmosphère extérieure, selon la position relative entre la tige de poussée 22 et le piston moteur 14.

Lorsque la tige de poussée 22 n'est pas actionnée, la valve trois voies précitée fait communiquer la chambre arrière 18 avec la chambre avant 16 par des passages traversant le piston 14. Ce dernier est alors maintenu dans sa position arrière de repos illustrée sur la Figure par un ressort de compression 24 placé dans la chambre avant 16 et interposé entre le boîtier 12 et le piston 14.

Lorsque le conducteur du véhicule actionne la pédale de frein, le déplacement de la tige de poussée 22 qui en résulte fait permuter la valve trois voies précitée, de telle sorte que la communication entre les chambres 16 et 18 est interrompue et que la chambre arrière 18 communique avec l'atmosphère extérieure par des passages également formés dans le piston moteur 14. Sous l'effet de la différence de pression qui en résulte entre les chambres 18 et 16, une force d'assistance est exercée vers l'avant sur le piston moteur 14 à l'encontre du ressort 24. Cette force est transmise à un organe de sortie constitué par une tige 26 habituellement reliée au maître-cylindre (non représenté) équipant le circuit de freinage du véhicule.

Dans le servomoteur représenté sur la Figure 1, un organe moteur auxiliaire 28 est également placé dans la chambre arrière 18. Dans l'exemple de réalisation représenté, cet organe moteur 28 est constitué par une enceinte annulaire dont les parois périphériques extérieure et intérieure sont constituées par une membrane élastomère à soufflet et dont les parois d'extrémité sont planes et respectivement en appui sur une plaque arrière du boîtier 12 et sur le piston moteur 14. L'organe moteur auxiliaire 28 délimite ainsi intérieurement une chambre de pression 30 totalement étanche par rapport à la chambre arrière 18.

Cette chambre de pression 30 est reliée par une canalisation 32 traversant le boîtier 12 à une source de fluide sous pression 34 située à l'extérieur du servomoteur 10, au travers d'un dispositif de commande 36 réalisé conformément à l'invention.

Le dispositif de commande 36 selon un mode de réalisation de l'invention est constitué essentiellement d'une valve 38, normalement fermée, placée dans la canalisation 32 entre la chambre 30 et la source 34, et de moyens d'actionnement 40 qui sont sensibles en permanence à la différence de pression régnant entre les chambres avant 16 et arrière 18 du servomoteur, pour commander automatiquement l'ouverture de la valve 38 lorsque la pression dans la chambre arrière 18 excède d'une valveur prédéterminée la pression dans la chambre avant 16.

De façon plus précise, le dispositif de commande 36 comprend un corps creux 42, réalisé en plusieurs parties, de façon à former successivement à l'intérieur du corps 42 et d'une extrémité à l'autre de celuici une chambre d'entrée annulaire 44 de fluide sous pression, une chambre de sortie 46 de fluide sous pression, une première chambre de commande 48 et une deuxième chambre de commande 30.

La chambre d'entrée 44 de fluide sous pression communique avec la source 34 par un passage 52 formé dans le corps 42 et sur lequel est raccordée une partie de la canalisation 32 située en amont du dispositif 36. La chambre de sortie 46 communique quant à elle avec la chambre de pression 30 par un passage 54 également formé dans le corps 42 et sur lequel est raccordée la partie de la canalisation 32 située en aval du dispositif 36.

La valve 38 est placée entre les chambres 44 et 46 de façon à interrompre normalement toute communication entre ces chambres. A cet effet, un clapet annulaire 56 délimitant intérieurement la chambre d'entrée 44, et sur lequel prend appui un ressort de compression 58, se trouve normalement en appui étanche contre un siège de valve 60 formé dans un passage axial par lequel les chambres 44 et 46 peuvent communiquer. Le ressort de compression 58 est également placé dans la chambre 44 et ses extrémités prennent appui respectivement sur une paroi d'extrémité du boîtier 42 et sur le clapet 56.

Au-delà de cette paroi d'extrémité du boîtier 42, ce dernier se prolonge sous la forme d'un tube 42a délimitant une chambre d'échappement 106 dont la communication avec l'atmosphère est contrôlée par un clapet unidirectionnel 100 autorisant l'échappement à l'atmosphère du fluide contenu dans la chambre 106.

Le clapet annulaire 38 coulisse de façon étanche dans le tube 42a, par l'intermédiaire d'un joint d'étanchéité 62 isolant les chambres 44 et 106 l'une par rapport à l'autre.

La première chambre de commande 48 du dispositif 36 communique en permanence soit directement avec la source de vide 63, soit avec la chambre avant 16 du servomoteur comme représenté, par une canalisation 64 raccordée sur un passage 66 formé dans le corps 42. De façon comparable, la deuxième chambre de commande 50 communique en permanence avec la chambre arrière 18 du servomoteur par une canalisation 68 raccordée sur un passage 70 également formé dans le corps 42.

Les moyens d'actionnement 40 de la valve 38 comprennent un piston 72 qui est monté de façon flottante à l'intérieur du corps 42, pour séparer de façon étanche les première et deuxième chambres de commande 48 et 50. Ce piston 72 est disposé approximativement selon le même axe que la valve 38 et il comporte un prolongement 72a qui traverse une cloison 74 appartenant au corps 42 et séparant, à l'intérieur de ce dernier, la chambre de sortie 46 de la première chambre 48. Ce prolongement 72a traverse la chambre de sortie 46 et son extrémité est reçue à l'intérieur du clapet annulaire 38. A l'intérieur de la chambre 46, le prolongement 72a supporte une rondelle de butée 76. Sous l'action d'un ressort de compression 78 placé dans la première chambre 48 et dont les extrémités prennent appui respectivement sur la cloison 74 et sur le piston 72, ce dernier occupe normalement au repos une position dans laquelle la rondelle de butée 76 est en appui contre la cloison 74, comme l'illustre la Figure unique.

Dans cette position de repos du piston 72, la chambre de sortie 46 communique en permanence avec la chambre 106 par des passages axial 104 et radiaux 102 formés dans l'extrémité du prolongement 72a. Entre la rondelle de butée 76 et les passages radiaux 102, le prolongement 72a comporte un siège annulaire 110 apte à venir en appui étanche sur le clapet 38.

Dans le mode de réalisation représenté, le passage axial 104 est prolongé jusqu'à l'extrémité opposée du piston 72 par un passage axial 80 débouchant dans la chambre 50 et comportant une restriction 108. Dans la position de repos du piston 72, la chambre 46 communique alors avec la deuxième chambre de commande 50 par ce passage axial 80 et les passages radiaux 102. Dans ces conditions, la chambre arrière 18 du servomoteur communique en permanence avec la chambre de pression 30 de l'organe moteur auxiliaire 28. Par conséquent, le comportement du servomoteur est alors totalement identique à celui d'un servomoteur classique ne comportant pas d'organe moteur auxiliaire.

Dans une variante de réalisation non représentée, le passage 80 n'existe pas. La chambre 30 reste alors à la pression atmosphérique tant que le piston 72 est au repos.

Le montage flottant du piston 72 à l'intérieur du corps 42 est assuré, entre les chambres de commande 48 et 50, par une première membrane étanche 82 et, entre le prolongement 72a et la cloison 74 par une deuxième membrane étanche 84. Ces membranes 82 et 84 permettent de centrer approximativement le piston 72 à l'intérieur du corps 42 du dispositif de commande, tout en autorisant un léger débattement permettant de garantir l'étanchéité du contact entre le siège 110 et le clapet 56, lorsque le piston 72 se déplace vers la gauche en considérant la Figure 1, comme cela va être décrit ultérieurement.

Au repos, les différents éléments du dispositif de commande 36 occupent les positions illustrées sur la Figure, c'est-à-dire que les chambres d'entrée 44 et de sortie 46 sont isolées l'une de l'autre par l'appui étanche du clapet 56 sur le siège de valve 60 sous l'action du ressort 58. La chambre de pression 30 de l'organe moteur auxiliaire du servomoteur est donc isolée de la source de pression 34. Au contraire, la chambre avant 46 peut communiquer avec la deuxième chambre de commande 50 par le passage 80 comme on l'a mentionné précédemment. Dans ce cas, la pression régnant dans la chambre 30 est donc identique à la pression régnant dans la chambre arrière 18 du servomoteur.

Lorsque le conducteur du véhicule actionne la pédale de frein, le dispositif de commande 36 reste dans la position de repos illustrée sur la Figure tant que la différence de pression entre les chambres de commande 50 et 48 est inférieure à un seuil prédéterminé correspondant à la précontrainte emmagasinée dans le ressort 78. Etant donné que les chambres de commande 48 et 50 communiquent respectivement avec la chambre avant 16 et la chambre arrière 18 du servomoteur, la position de l'organe formant piston 70 reste donc inchangée tant que la pression régnant dans la chambre arrière 18 ne dépasse pas d'une valeur correspondant audit seuil prédéterminé la pression régnant dans la chambre avant 16 du servomoteur. Avant que ce seuil soit atteint lorsque le passage 80 existe, la pression dans la chambre 30 de l'organe moteur auxiliaire 28 augmente donc progressivement en même temps que la pression régnant dans la chambre arrière 18. La force d'assistance appliquée sur le piston moteur 14 du servomoteur est alors identique à celle d'un servomoteur classique au début de la phase de freinage.

Lorsque la phase de freinage se prolonge au-delà de cette phase initiale, ce qui correspond en pratique à un freinage d'urgence, la différence de pression entre la chambre arrière 18 et la chambre avant 16, qui correspond à la différence de pression entre les chambres de commande 50 et 48, dépasse le seuil correspondant à la précontrainte emmagasinée dans le ressort 78. L'organe formant piston 72 se déplace alors vers la gauche en considérant la Figure 1, de telle sorte que le siège 110 porté par le prolongement 72a vient en appui étanche sur le clapet 56 et déplace ce dernier en éloignement du siège 60 à l'encontre du ressort 58. La chambre de sortie 46 est ainsi, dans un premier temps, isolée de la chambre de commande 50 et de la chambre 106, puis mise en communication avec la chambre d'entrée 44. Il en résulte que la chambre 30 de l'organe moteur auxiliaire 28, qui était auparavant à la même pression que la chambre arrière 18 du servomoteur, voit sa pression augmenter rapidement sous l'effet de sa mise en communication avec la source de pression 34. Une force d'assistance engendrée par le servomoteur lui-même est ainsi appliquée au piston moteur 14, de sorte que la force exercée sur la tige de sortie 26 du servomoteur augmente plus rapidement que sur un servomoteur classique.

Bien entendu, dès que le conducteur du véhicule relâche, même momentanément, la pédale de frein, la différence de pression entre les chambres arrière 18 et avant 16 du servomoteur redescend à une valeur inférieure à celle du tarage du ressort 78, de sorte que le moyen formant piston 72 revient à sa position initiale représentée sur la Figure. La pression dans la chambre 30 de l'organe moteur auxiliaire redevient alors égale à la pression dans la chambre arrière 18 du servomoteur, par échappement au travers du passage 80, lorsque ce dernier existe. En l'absence de ce passage 80, la pression dans la chambre 30 reste égale à la pression atmosphérique.

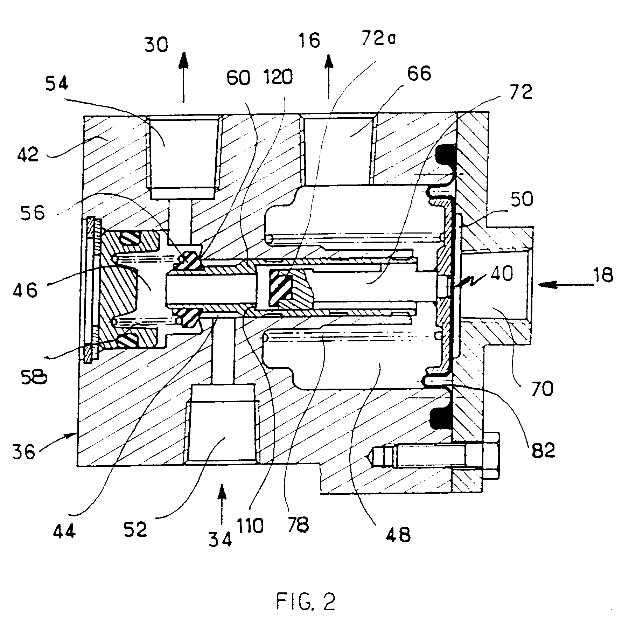

La Figure 2 représente un autre mode de réalisation d'un dispositif de commande 36 selon l'invention.

En référence maintenant à cette Figure 2, le corps 42 est percé de quatre passages 54, 52, 66, 70 respectivement connectés à la chambre de pression 30, à une source de fluide sous pression 34, par exemple d'air comprimé, à la chambre avant 16 du servomoteur et à la chambre arrière 18 du servomoteur. Le passage 54 communique avec une chambre de sortie 46, tandis que le passage 52 communique avec une chambre annulaire d'entrée 44. Les passages 66 et 70 communiquent respectivement avec les chambres de commande 48 et 50 séparées de façon étanche par un moyen d'actionnement 40 constitué par un piston 72 et une membrane d'étanchéité 82. Ce moyen d'actionnement 40 se déplace en fonction de la différence entre les pressions régnant dans les chambres de commande 48, 50, à l'encontre d'un ressort hélicoïdal 78 disposé dans l'une d'elles.

L'extrémité 72a du piston 72 constitue un clapet pouvant venir en appui sur un siège de valve 110 ménagé dans un cylindre creux 120, partiellement autour duquel est ménagée la chambre annulaire d'entrée 44.

Un épaulement aunnulaire 60 dans le corps 48 constitue un autre siège de valve séparant la chambre d'entrée 44 de la chambre de sortie 46. Un clapet annulaire 56 est normalement en appui sur ce siège 60 grâce à un ressort hélicoïdal 58 disposé dans la chambre de sortie 46.

Au repos du système, c'est à dire en absence de freinage, comme représenté sur la Figure, le clapet 56 obture la communication entre la chambre d'entrée 44 et la chambre de sortie 46. Les variations de la pression du fluide sous pression dans la chambre d'entrée 44 n'ont alors aucun effet sur le système, les parois de la chambre annulaire d'entrée 44 équilibrant l'ensemble.

On sait qu'au repos, les chambres avant 16 et arrière 18 du servomoteur sont sous vide à une même pression. Il en est de même de la chambre de pression 30 qui communique alors avec la chambre avant 16 par l'intermédiaire de la chambre de sortie 46, le cylindre creux 120, la valve 110, 72a, la chambre de commande 48 et le passage 66.

Lors d'un freinage, la pression dans la chambre arrière 18 augmente, tandis que celle dans la chambre avant 16 reste très basse. Le moyen d'actionnement 40 sensible à cette différence entre les pressions régnant dans les chambres de commande 48 et 50 où l'on retrouve la différence des pressions entre les chambres avant et arrière, se déplace donc, à l'encontre du ressort 78 et, dans un premier temps, le clapet 72a vient en appui sur le siège de valve 110. On comprend que ceci coupe la communication entre la chambre de pression 30 et la chambre avant 16. Le clapet 56 qui est solidaire du tube creux 120 reste en appui sur son siège 60 sous l'effet du ressort 58 dont la précontrainte va déterminer le seuil d'ouverture de ce clapet lorsque la différence entre les pressions régnant dans les chambres de commande 48, 50 augmentera encore. A partir de ce seuil, dans un deuxième temps donc, le clapet 56 s'écarte de son siège 60 et les chambres d'entrée 44 et de sortie 46 communiquent. La source de fluide sous pression 34 est alors directement reliée à la chambre de pression 30, ce qui augmente l'effort appliqué par le servomoteur de façon correspondante.

La réaction du fluide sous pression sur le clapet 56 tend à repousser ce dernier sur son siège 60 et équilibre l'effort opposé déterminé par l'action de la différence entre les pressions régnant dans les chambres 48, 50 sur le moyen d'actionnement 40.

Lorsque le conducteur du véhicule relâche le frein, le dispositif de commande fonctionne de façon inverse, c'est à dire que le clapet 56 revient d'abord en appui sur le siège 60 pour fermer la communication entre la source de pression 34 et la chambre de pression 30, puis, au relâchement complet du frein, le clapet 72a s'écarte de son siège 110 en mettant à nouveau la chambre de pression 30 en communication avec la chambre avant 16 du servomoteur. Le dispositif reprend alors sa position de repos représentée.

Grâce au dispositif de commande 36 selon l'invention, il est donc possible sans modifier le servomoteur d'en accroître automatiquement l'efficacité lorsque la différence de pression entre les chambres arrière et avant de ce dernier dépasse un seuil prédéterminé. Pour un dimensionnement donné du servomoteur, son efficacité est donc accrue. A l'inverse, on obtient une efficacité comparable à celle d'un servomoteur classique pour un encombrement diamétral réduit.

Bien entendu, l'invention n'est pas limitée aux modes de réalisation qui viennent d'être décrits à titre d'exemples, mais en couvre toutes les variantes. En premier lieu, au lieu d'être totalement pneumatique comme cela vient d'être décrit, le dispositif de commande selon l'invention peut être constitué d'une valve électromagnétique dont les déplacements sont commandés en réponse à des signaux électriques engendrés par un calculateur recevant des signaux représentatifs de la pression régnant respectivement dans les chambres arrière et avant du servomoteur.

## Revendications

1. Dispositif de commande d'un servomoteur d'assistance (10) comportant un boîtier (12), dans lequel un piston moteur (14) séparant une chambre avant (16) d'une chambre arrière (18) peut se déplacer lors d'un actionnement d'un organe de commande d'entrée (22) établissant une différence de pression entre la chambre arrière et la chambre avant, un organe moteur auxiliaire (28) comportant une chambre de pression (30) étant placé dans la chambre arrière (18) du servomoteur, le dispositif de commande (36) étant placé entre la chambre de pression du servomoteur et une source de pression (34), et étant caractérisé par le fait qu'il comprend une valve (38) normalement fermée, au travers de laquelle la chambre de pression communique avec la source de pression, et des moyens d'actionnement (40) de ladite valve, sensibles à la différence de pression entre la chambre arrière et la chambre avant pour ouvrir automatiquement la valve lorsque cette différence dépasse un seuil prédéterminé.

2. Dispositif selon la revendication 1, caractérisé par le fait qu'il comprend un corps creux (42) dans lequel sont formés une chambre d'entrée (44) de fluide sous pression communiquant avec la source de pression (34), une chambre de sortie (46) de fluide sous pression, communiquant avec la chambre de pression (30), une première chambre de commande (48) communiquant avec la chambre avant (16) et une deuxième chambre de commande (50) communiquant avec la chambre arrière (18), lesdites chambres d'entrée et de sortie formant entre elles un premier siège de valve (60) contre lequel un clapet (56) est normalement maintenu en appui étanche par un premier moyen élastique (58), les première et deuxième chambres de commande étant séparées de façon étanche par un moyen formant piston (72) axialement aligné avec le siège de valve et dont un prolongement (72a) porte un deuxième siège de valve (110) apte à venir en appui étanche sur le clapet (56) et à déplacer ce dernier en éloignement du premier siège (60), un deuxième moyen élastique (78) maintenant normalement le deuxième siège de valve éloigné du clapet.

3. Dispositif selon la revendication 2, caractérisé par le fait que ledit seuil est déterminé par la valeur de la précontrainte emmaganisée dans le deuxième moyen élastique (78).

4. Dispositif selon l'une quelconque des revendications 2 et 3, caractérisé par le fait que le clapet (56) est un clapet annulaire délimitant intérieurement une chambre d'échappement (106) isolée de la chambre d'entrée (44) et communiquant avec l'atmosphère par un clapet anti-retour (100), ladite chambre d'échappement communiquant avec la chambre de sortie (46) lorsque le deuxième siège de valve (110) n'est pas en appui sur le clapet (38).

5. Dispositif selon l'une quelconque des revendications 2 à 4, caractérisé par le fait que ledit prolongement (72a) traverse de façon étanche une cloison (74) du corps creux, séparant la chambre de sortie (46) de la première chambre de commande (48).

6. Dispositif selon la revendication 5, caractérisé par le fait que ledit moyen formant piston (72) est traversé axialement par un passage (80) par lequel la chambre de sortie (46) communique normalement avec la deuxième chambre de commande (50), ce passage étant obturé lorsque le deuxième siège de valve (110) est en appui sur le clapet.

7. Dispositif selon la revendication 6, caractérisé par le fait que le passage (80) comporte une restriction (108).

8. Dispositif selon l'une quelconque des revendications 5 à 7, caractérisé par le fait que le prolongement (72a) du moyen formant piston (72) supporte une butée (76) placée dans la chambre de sortie (46) et maintenue normalement en appui sur ladite cloison par le deuxième moyen élastique (78).

9. Dispositif selon l'une quelconque des revendications 2 à 8, caractérisé par le fait que le deuxième moyen élastique comprend au moins un ressort de compression (78) placé dans la première chambre de commande (48).

10. Dispositif selon l'une quelconque des revendications 2 à 9, caractérisé par le fait que le deuxième moyen élastique comprend au moins un ressort de compression (58) placé dans la chambre d'entrée (44).

11. Dispositif selon l'une quelconque des revendications 2 à 10, caractérisé par le fait que le moyen formant piston (72) est monté de façon flottante à l'intérieur du corps creux (42).

12. Dispositif selon la revendication 1, caractérisé par le fait qu'il comprend un corps creux (42) dans lequel sont formées une chambre d'entrée (44) de fluide sous pression (34), une chambre de sortie (46) de fluide sous pression, communiquant avec la chambre de pression (30), une première chambre de commande (48) communiquant avec la chambre avant (16) et une deuxième chambre de commande (50) communiquant avec la chambre arrière (18), lesdites chambres d'entrée et de sortie formant entre elles un premier siège de valve (60) contre lequel un premier clapet (56) est normalement maintenu en appui étanche par un premier moyen élastique (58), les première et deuxième chambres de commande étant séparées de façon étanche par un moyen formant piston (72) axialement aligné avec le premier siège de valve et dont un prolongement (72a) forme un second clapet et apte à venir en appui étanche sur un second siège de valve (110) solidaire du premier clapet (56) de manière à fermer dans un premier temps une communication entre ladite chambre de sortie (46) de fluide sous pression et ladite chambre avant (16) lorsqu'une différence de pression s'établit entre lesdites chambres de commande (48, 50), et dans un deuxième temps, à déplacer ledit premier clapet (56) en éloignement dudit premier siège (60), un deuxième moyen élastique (78) maintenant normalement ledit second clapet éloigné dudit second siège (110).

13. Dispositif selon la revendication 12, caractérisé par le fait que ladite chambre d'entrée (44) est une chambre annulaire, ledit premier clapet (56) étant annulaire et étant solidaire d'un cylindre creux (120) portant le second siège de valve (110), ladite chambre de sortie (46) communiquant avec ladite chambre avant (16) par l'intermédiaire dudit cylindre creux (120) lorsque ledit second clapet n'est pas en appui sur ledit second siège de valve (110).

14. Dispositif selon la revendication 12 ou 13, caractérisé par le fait que la précontrainte emmaganisée dans ledit premier moyen élastique (58) détermine ledit seuil déterminé.

15. Dispositif selon l'une quelconque des revendications 12 à 14, caractérisé par le fait que ledit premier moyen élastique (58) est constitué par un ressort de compression disposé dans ladite chambre de sortie (46) et s'appuyant contre ledit premier clapet (56).

16. Dispositif selon l'une quelconque des revendications 12 à 15, caractérisé par le fait que ledit second moyen élastique (78) est constitué par un ressort disposé dans une (48) desdites chambres de commande.

**Patentansprüche**

1. Steuervorrichtung für Hilfs-Servomotor (10), der ein Gehäuse (12) aufweist, in dem sich ein Arbeitskolben (14), der eine vordere Rammer (16) von einer hinteren Kammer (18) trennt, bei einer Betätigung eines Einlaß-Steuerelementes (22) verschieben kann und dabei zwischen der hinteren Kammer und der vorderen Kammer eine Druckdifferenz herstellt, wobei ein Hilfs-Arbeitselement (28), das eine Druckkammer (30) aufweist, in der hinteren Kammer (18) des Servomotors angeordnet ist, wobei die Steuervorrichtung (36) zwischen der Druckkammer des Servomotors und einer Druckquelle (34) angeordnet ist und dadurch gekennzeichnet ist, daß sie ein normalerweise geschlossenes Ventil (38), über das die Druckkammer mit der Druckquelle in Verbindung steht, und Betätigungsmittel (40) für das Ventil, die auf die Druckdifferenz zwischen der hinteren Kammer und der vorderen Kammer ansprechen, um automatisch das Ventil zu öffnen, wenn diese Differenz einen vorgegebenen Schwellenwert übersteigt, umfaßt.

2. Vorrichtung gemäß Anspruch 1, dadurch gekennzeichnet, daß sie einen Hohlkörper (42) umfaßt, in dem eine mit der Druckquelle (34) in Verbindung stehende Eintrittskammer (44) für das mit Druck beaufschlagte Fluid, eine mit der Druckkammer (30) in Verbindung stehende Austrittskammer (46) für das mit Druck beaufschlagte Fluid, eine mit der vorderen Kammer (16) in Verbindung stehende erste Steuerkammer (48) und eine mit der hinteren Kammer (18) in Verbindung stehende zweite Steuerkammer (50) ausgebildet sind, wobei die Eintrittskammer und die Austrittskammer zwischen sich einen ersten Ventilsitz (60) bilden, gegen den durch ein erstes elastisches Mittel (58) ein Ventil (56) normalerweise dicht aufliegend gehalten wird, wobei die erste und die zweite Steuerkammer auf dichte Weise durch ein Mittel getrennt werden, das einen mit dem Ventilsitz axial ausgerichteten Kolben (72) bildet und dessen Verlängerung (72a) einen zweiten Ventilsitz (110) trägt, der dazu geeignet ist, auf dem Ventil (56) dicht aufzuliegen und dieses letztere bei Entfernung vom ersten Sitz (60) verschiebt, wobei ein zweites elastisches Mittel (78) den zweiten Ventilsitz normalerweise vom Ventil entfernt hält.

3. Vorrichtung gemäß Anspruch 2, dadurch gekennzeichnet, daß der Schwellenwert durch den Wert der Vorspannung bestimmt wird, die im zweiten elastischen Mittel (78) gespeichert ist.

4. Vorrichtung gemäß einem der Ansprüche 2 oder 3, dadurch gekennzeichnet, daß das Ventil (56) ein Ringventil ist, das im Inneren eine von der Eintrittskammer (44) isolierte und über ein Rückschlagventil (100) mit der Atmosphäre in Verbindung stehende Auslaßkammer (106) begrenzt, wobei die Auslaßkammer mit der Austrittskammer (46) in Verbindung steht, wenn sich der zweite Ventilsitz (110) nicht am Ventil (38) abstützt.

5. Vorrichtung gemäß einem der Ansprüche 2 bis 4, dadurch gekennzeichnet, daß die Verlängerung (72a) auf dichte Weise eine Trennwand (74) des Hohlkörpers, die die Austrittskammer (46) von der ersten Steuerkammer (48) trennt, durchsetzt.

6. Vorrichtung gemäß Anspruch 5, dadurch gekennzeichnet, daß das einen Kolben (72) bildende Mittel axial von einem Durchlaß (80) durchsetzt wird, durch den die Austrittskammer (46) normalerweise mit der zweiten Steuerkammer (50) in Verbindung steht, wobei dieser Durchlaß gesperrt ist, wenn der zweite Ventilsitz (110) auf dem Ventil aufliegt.

7. Vorrichtung gemäß Anspruch 6, dadurch gekennzeichnet, daß der Durchlaß (80) eine Begrenzung (108) aufweist.

8. Vorrichtung gemäß einem der Ansprüche 5 bis 7, dadurch gekennzeichnet, daß die Verlängerung (72a) des den Kolben (72) bildenden Mittels einen Anschlag (76) trägt, der in der Austrittskammer (46) angeordnet ist und normalerweise durch das zweite elastische Mittel (78) so gehalten wird, daß er an der Trennwand aufliegt.

9. Vorrichtung gemäß einem der Ansprüche 2 bis 8, dadurch gekennzeichnet, daß das zweite elastische Mittel wenigstens eine Kompressionsfeder (78) umfaßt, die in der ersten Steuerkammer (48) angeordnet ist.

10. Vorrichtung gemäß einem der Ansprüche 2 bis 9, dadurch gekennzeichnet, daß das zweite elastische Mittel wenigstens eine Kompressionsfeder (58) umfaßt, die in der Eintrittskammer (44) angeordnet ist.

11. Vorrichtung gemäß einem der Ansprüche 2 bis 10, dadurch gekennzeichnet, daß das den Kolben (72) bildende Mittel schwebend im Inneren des Hohlkörpers (42) angebracht ist.

12. Vorrichtung gemäß Anspruch 1, dadurch gekennzeichnet, daß sie einen Hohlkörper (42) umfaßt, in dem eine Eintrittskammer (44) für das mit Druck beaufschlagte Fluid (34), eine mit der Druckkammer (30) in Verbindung stehende Austrittskammer (46) für das mit Druck beaufschlagte Fluid, eine mit der vorderen Rammer (16) in Verbindung stehende erste Steuerkammer (48) und eine mit der hinteren Kammer (18) in Verbindung stehende zweite Steuerkammer (50) ausgebildet sind, wobei die Eintrittskammer und die Austrittskammer zwischen sich einen ersten Ventilsitz (60) bilden, gegen den ein erstes Ventil (56) normalerweise durch ein erstes elastisches Mittel (58) dicht aufliegend gehalten wird, wobei die erste und die zweite Steuerkammer durch ein Mittel auf dichte Weise getrennt werden, das einen Kolben (72) bildet, der mit dem ersten Ventilsitz axial ausgerichtet ist und dessen Verlängerung (72a) ein zweites Ventil bildet, das dazu geeignet ist, auf einem mit dem ersten Ventil (56) verbundenen zweiten Ventilsitz (110) dicht aufzuliegen, derart, daß in einem ersten Zeitpunkt eine Verbindung zwischen der Austrittskammer (46) für das mit Druck beaufschlagte Fluid und der vorderen Kammer (16) unterbrochen wird, wenn sich zwischen den Steuerkammem (48, 50) eine Druckdifferenz aufbaut, und in einem zweiten Zeitpunkt das erste Ventil (56) in eine Entfernung vom ersten Sitz (60) verschoben wird, wobei ein zweites elastisches Mittel (78) normalerweise das zweite Ventil vom zweiten Sitz (110) entfernt hält.

13. Vorrichtung gemäß Anspruch 12, dadurch gekennzeichnet, daß die Eintrittskammer (44) eine Ringkammer ist, wobei das erste Ventil (56) ringförmig ist und mit einem Hohlzylinder (120), der den zweiten Ventilsitz (110) trägt, verbunden ist, wobei die Austrittskammer (46) mit der vorderen Rammer (16) über den Hohlzylinder (120) in Verbindung steht, wenn das zweite Ventil nicht auf dem zweiten Ventilsitz (110) aufliegt.

14. Vorrichtung gemäß Anspruch 12 oder 13, dadurch gekennzeichnet, daß die im ersten elastischen Mittel (58) gespeicherte Vorspannung den bestimmten Schwellenwert bestimmt.

15. Vorrichtung gemäß einem der Ansprüche 12 bis 14, dadurch gekennzeichnet, daß das erste elastische Mittel (58) von einer Rompressionsfeder gebildet wird, die in der Austrittskammer (46) angeordnet ist und am ersten Ventil (56) aufliegt.

16. Vorrichtung gemäß einem der Ansprüche 12 bis 15, dadurch gekennzeichnet, daß das zweite elastische Mittel (78) von einer Feder gebildet wird, die in einer (48) der Steuerkammern angeordnet ist.

## Claims

1. Control device of a booster (10), comprising a housing (12), in which a drive piston (14) separating a front chamber (16) from a rear chamber (18) can move in the event of an actuation of an input control member (22) generating a pressure difference between the rear chamber and the front chamber, an auxiliary drive member (28) having a pressure chamber (30) being placed in the rear chamber (18) of the booster, the control device (36) being placed between the pressure chamber of the booster and a pressure source (34) and being characterized in that it comprises a normally closed valve (38), via which the pressure chamber communicates with the pressure source, and means (40) for actuating said valve, which are sensitive to the pressure difference between the rear chamber and the front chamber, in order to open the valve automatically when this difference exceeds a predetermined threshold.

2. Device according to Claim 1, characterized in that it comprises a hollow body (42), in which are formed a pressurized-fluid inlet chamber (44) communicating with the pressure source (34), a pressurized-fluid outlet chamber (46) communicating with the pressure chamber (30), a first control chamber (48) communicating with the front chamber (16) and a second control chamber (50) communicating with the rear chamber (18), said inlet and outlet chambers forming between them a first valve seat (60), against which a shutter (56) is normally kept bearing sealingly by a first elastic means (58), the first and second control chambers being separated sealingly by a means forming a piston (72) which is axially aligned with the valve seat and an extension (72a) of which carries a second valve seat (110) capable of coming to bear sealingly on the shutter (56) and of moving the latter away from the first seat (60), a second elastic means (78) normally keeping the second valve seat away from the shutter.

3. Device according to Claim 2, characterized in that said threshold is determined by the value of the prestress stored in the second elastic means (78).

4. Device according to either one of Claims 2 and 3, characterized in that the shutter (56) is an annular shutter delimiting internally a discharge chamber (106) isolated from the inlet chamber (44) and communicating with the atmosphere via a non-return valve (100), said discharge chamber communicating with the outlet chamber (46) when the second valve seat (110) does not bear on the shutter (38).

5. Device according to any one of Claims 2 to 4, characterized in that said extension (72a) passes sealingly through a partition (74) of the hollow body, separating the outlet chamber (46) from the first control chamber (48).

6. Device according to Claim 5, characterized in that said means forming a piston (72) has passing axially through it a duct (80), via which the outlet chamber (46) normally communicates with the second control chamber (50), said duct being closed off when the second valve seat (110) bears on the shutter.

7. Device according to Claim 6, characterized in that the duct (80) has a restriction (108).

8. Device according to any one of Claims 5 to 7, characterized in that the extension (72a) of the means forming a piston (72) supports a stop (76) placed in the outlet chamber (46) and normally kept bearing on said partition by the second elastic means (78).

9. Device according to any one of Claims 2 to 8, characterized in that the second elastic means comprises at least one compression spring (78) placed in the first control chamber (48).

10. Device according to any one of Claims 2 to 9, characterized in that the second elastic means comprises at least one compression spring (58) placed in the inlet chamber (44).

11. Device according to any one of Claims 2 to 10, characterized in that the means forming a piston (72) is mounted in a floating manner inside the hollow body (42).

12. Device according to Claim 1, characterized in that it comprises a hollow body (42), in which are formed an inlet chamber (44) for pressurized-fluid (34), a pressurized-fluid outlet chamber (46) communicating with the pressure chamber (30), a first control chamber (48) communicating with the front chamber (16) and a second control chamber (50) communicating with the rear chamber (18), said inlet and outlet chambers forming between them a first valve seat (60), agains which a first shutter (56) is normally held to bear in a sealed manner by a first elastic means (58), so as to provide a seal, the first and second control chambers being separated in a sealed manner by a means forming a piston (72) which is axially aligned with the first valve seat and an extension (72a) of which forms a second shutter capable of coming to bear, so as to provide a seal, on a second valve seat (110) fixed to the first shutter (56) in such a way as, in a first stage, to shut off a communication between said pressurized-fluid outlet chamber (46) and said front chamber (16) when a pressure difference is established between said control chambers (48, 50) and, in a second stage, to move said first shutter (56) away from said first seat (60), a second elastic means (78) normally keeping said second shutter away from said second seat (110).

13. Device according to Claim 12, characterized in that said inlet chamber (44) is an annular chamber, said first shutter (56) being annular and being fixed to a hollow cylinder (120) carrying the second valve seat (110), said outlet chamber (46) communicating with said front chamber (16) by means of said hollow cylinder (120) when said second shutter does not bear on said second valve seat (110).

14. Device according to Claim 11 or 13, characterized in that the prestress stored in said first elastic means (58) determines said determined threshold.

15. Device according to any of Claims 11 to 14, characterized in that said first elastic means (58) is composed of a compression spring arranged in said outlet chamber (46) and bearing against said first shutter (56).

16. Device according to any of the Claims 11 to 15, characterized in that said second elastic means (78) is composed of a spring arranged in one (48) of said control chambers.

FIG 1

FIG. 2